# EUROPEAN PATENT APPLICATION

(11) **EP 2 043 355 A1**
(43) Date of publication of application: **01.04.2009**
(21) Application number: 08163050.1
(22) Date of filing: 27.08.2008
(51) Int. Cl.: H04N 5/04, H04N 5/46

(54) **Signal processing device**

(30) Priority: 25.09.2007 JP 2007247418
(71) Applicant: NEC Electronics Corporation, Kawasaki, Kanagawa 211-8668 (JP)
(72) Inventor: Matsui, Takeo, Kanagawa 211-8668 (JP)
(74) Representative: Betten & Resch

(57) **Abstract**

A first candidate selection portion 130 selects formant candidates based on the horizontal synchronizing cycle and the vertical synchronizing cycle of an input video signal. A second candidate selection portion 140 selects formats having the tolerance ranges for the horizontal synchronizing cycles within which the horizontal synchronizing cycle of the input video signal falls as format candidates. A format decision portion 160 determines the format of the input video signal from format candidates from the first candidate selection portion 130 when format candidate (s) is obtained by the first candidate selection portion 130, and determines the format of the input video signal from format candidates selected by the second candidate selection portion 140 when no format candidate is obtained by the first candidate selection portion 130.

## Description

### BACKGROUND OF THE INVENTION

### 1. Field of the Invention

The present invention relates to signal processing, in particular, a signal processing technique to determine the formats of input video signals.

### 2. Description of Related Art

Various standards have been defined for video signal formats, and a video display device receives video signals having these various formats. The display device automatically determines the format of an input video signal, and reproduces images by carrying out appropriate signal processing for the determined format so that the optimal images are reproduced from the input video signal.

Various methods of determining video signals formats have been proposed. For example, Japanese Utility Model No. 3-75490 (Patent document 1) and Japanese Unexamined Patent Application Publication No. 2003-5731 (Patent document 2) disclose determination methods using the horizontal synchronizing cycles of video signals. Furthermore, Japanese Unexamined Patent Application Publication No. 2003-233365 (Patent document 3) discloses a determination method based on vertical synchronizing cycles and the number of horizontal lines. In recent years, as video signal formats have become more diversified, the determination of the video signal formats has been requiring a wide variety of characteristics of the video signals. In response to those needs, determination methods using various determination factors such as vertical synchronizing cycles, synchronizing polarities, and the number of lines, as well as horizontal synchronizing cycles are disclosed in Japanese Unexamined Patent Application Publication Nos. 10-83174, 6-138852, 2002-189465, 10-105138, 4-271395, and 6-161415 (Patent documents 4 - 9 respectively).

In determination methods of Patent documents 4 - 6, a video signal format can be determined by comparing various determination factors between the input video signal and the formats stored in a database when the format of the input video signal is one of already-known formats. Meanwhile, it has been desired that images should be properly displaced from an input video signal even when the format of the input video signal is unknown.

Japanese Unexamined Patent Application Publication No. 10-105138 (Patent document 7) discloses a method in which a first decision is made based on a horizontal synchronizing cycle, a vertical synchronizing cycle, and a synchronizing polarity, and a second decision is made based on the number of lines. Furthermore, when the format is not any of the formats that are consistent with the determination conditions, the display mode is eventually determined by a third determination process, which is carried out based on the number of horizontal lines per vertical synchronizing cycle and a vertical synchronizing frequency.

Japanese Unexamined Patent Application Publication No. 4-271395 (Patent document 8) discloses a method in which a decision is made by using a horizontal synchronizing frequency as well as other determination factors. Furthermore, when the format of an input video signal cannot determined by this determination process, the user may manually adjust the determination factors of the display device to display optimal images from the input video signal, and the each value for the adjusted determination factors is stored in the display device.

Japanese Unexamined Patent Application Publication No. 6-161415 (Patent document 9) discloses a method for determining the formats by fuzzy inference using a horizontal synchronizing cycle and other determination factors of an input video signal.

In general, a clock signal having a frequency corresponding to the dot frequency of pixels (dot clock signal) is generated based on the horizontal synchronizing signal of an input video signal, and images are reproduced from the input video signal based on this dot clock in a recent image reproducing device. In the method disclosed in Patent document 7, when an input video signal having an unknown format is inputted, the reproduction mode is determined based on a vertical synchronizing frequency. Therefore, the generation of the dot clock is difficult, and sometimes impossible depending on the conditions.

The method disclosed in Patent document 8 requires the intervention of the user, i.e., the manual adjustment by the user, when an input video signal having an unknown format is inputted, and thereby is ineffective.

The method disclosed in Patent document 9 involves calculation using fuzzy inference, and thereby requires time and resources for the calculation.

### SUMMARY

One embodiment in accordance with the present invention is a signal processing device. The signal processing device includes: a first candidate selection portion to select format candidate(s) of an input video signal based on a horizontal synchronizing cycle and a vertical synchronizing cycle of the input video signal; a horizontal synchronizing cycle table to store a horizontal synchronizing cycle for each format of the input video signal; a second candidate selection portion to select format(s), for which the horizontal synchronizing cycle of the input video signal is within a predetermined tolerance range for the horizontal synchronizing cycle, as format candidate(s) by referring to the horizontal synchronizing cycle table; and a format decision portion to determine a format candidate selected by the first candidate selection portion as the format of the input video signal when format candidate (s) is obtained by the first candidate selection portion, and determine a format candidate selected by the second candidate selection portion as the format of the input video signal when no format candidate is obtained by the first candidate selection portion.

Incidentally, the present invention also includes other embodiments that are expressed by methods, systems, and computer programs representing the above-mentioned apparatus.

The signal processing technique in accordance with one embodiment of the present invention enables generating a dot clock signal based on the horizontal synchronizing cycle of an input video signal and effectively processing the input video signal to reproduce images, even when the format of the input video signal is unknown.

### BRIEF DESCRIPTION OF THE DRAWINGS

The above and other obj ects, advantages and features of the present invention will be more apparent from the following description of certain preferred embodiments taken in conjunction with the accompanying drawings, in which:
Fig. 1 shows an image reproducing device in accordance with one embodiment of the invention;
Fig. 2 shows a format evaluation portion in the image reproducing device shown in Fig. 1;
Fig. 3 shows examples of known formats;
Fig. 4 shows a first table used by a first candidate selection portion in the format evaluation portion shown in Fig. 2;
Fig. 5 shows a first table used by a second candidate selection portion in the format evaluation portion shown in Fig. 2;
Fig. 6 shows a first table used by a third candidate selection portion in the format evaluation portion shown in Fig. 2;
Fig. 7 shows format numbers selected by the first candidate selection portion based on the horizontal synchronizing cycle and vertical synchronizing cycle of an input video signal;
Fig. 8 shows a second candidate selection portion in the format evaluation portion shown in Fig. 2; and
Fig. 9 shows an oscillation range control portion and a PLL circuit of the reproduction processing portion in the image reproducing device shown in Fig. 1.

### DETAILED DESCRIPTION OF THE PREFERRED EMBODIMENTS

The invention will now be described herein with reference to illustrative embodiments. Those skilled in the art will recognize that many alternative embodiments can be accomplished using the teachings of the present invention and that the invention is not limited to the embodiments illustrated for explanatory purposes.

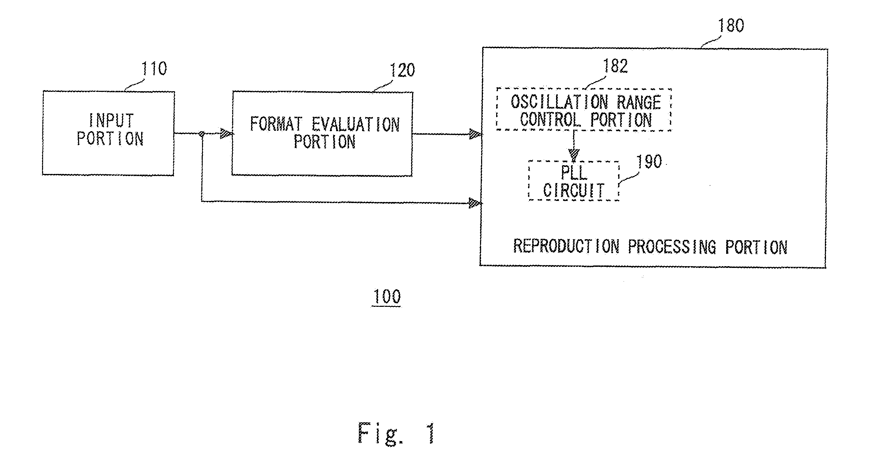

Embodiments of the present invention are explained hereinafter with reference to the drawings. Fig. 1 shows an image reproducing device 100 in accordance with one embodiment of the present invention. The image reproducing device 100 includes an input portion 110, a format evaluation portion 120, and a reproduction processing portion 180. The input portion 110 supplies image signals and their accessory signals to the format evaluation portion 120 and the reproduction processing portion 180, and the format evaluation portion 120 determines the formats of the input video signals from that video signals and the accessory signals. The reproduction processing portion 180 reproduce images from the input video signals by carrying out processes in accordance with the format determined by the format evaluation portion 120. The reproduction processing portion 180 includes an oscillation range control portion 182 and a PLL (Phase-Locked Loop) circuit 190. Incidentally, a horizontal synchronizing signal and a vertical synchronizing signal are used as the accessory signal in this embodiment.

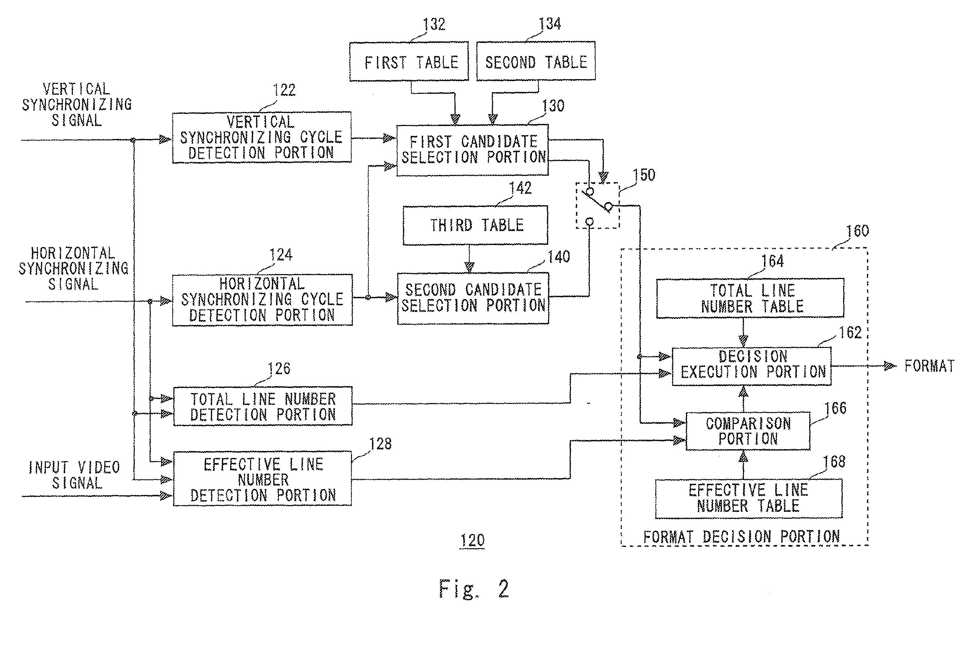

Fig. 2 shows the format evaluation portion 120 in the image reproducing device 100. The format evaluation portion 120 includes a vertical synchronizing cycle detection portion 122, a horizontal synchronizing cycle detection portion 124, a total line number detection portion 126, an effective line number detection portion 128, a first candidate selection portion 130, a first table 132, a second table 134, a second candidate selection portion 140, a third table 142, a switch 150, and a format decision portion 160. Furthermore, the format decision portion 160 has a decision execution portion 162, a total line number table 164, a comparison portion 166, and an effective line number table 168.

Firstly, each of the tables used by the image reproducing device 100 in accordance with this embodiment (i.e., first table 132, second table 134, third table 142, total line number table 164, and effective line number table 168) is explained hereinafter in advance to the detailed explanation of the format decision by the format evaluation portion 120.

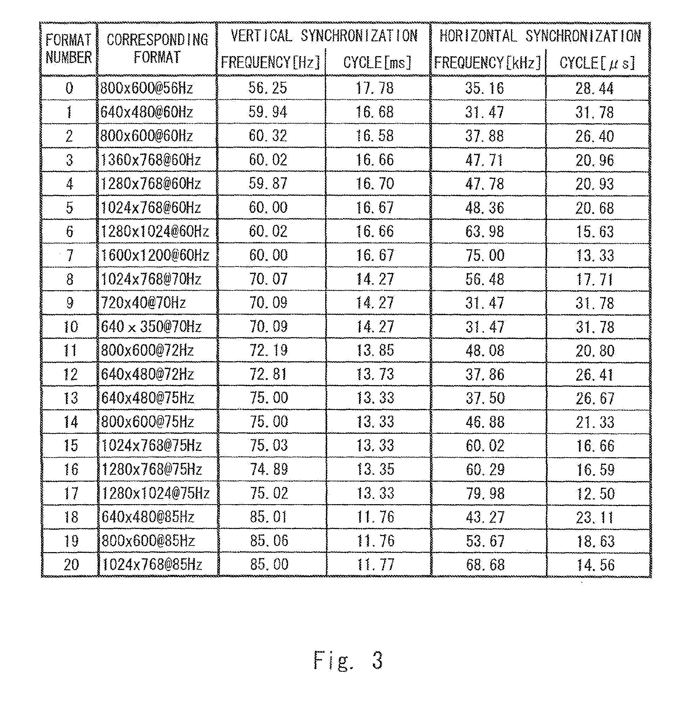

Each of the above-mentioned tables is produced based on already-known format data. Fig. 3 shows examples of already-known formats in this embodiment of the present invention.

In Fig. 3, "Format numbers" are successively assigned to the known formats, and there are 21 known formats, to which numbers 0 - 20 are successively assigned, in this example. "Corresponding formats" are commonly-used expressions, and expressed in the format "resolution @ vertical synchronizing frequency" in the example. Furthermore, "Vertical synchronizations" field indicates "Frequencies" and "Cycles" of the vertical synchronizing signals of those formats, and "Horizontal synchronizations" field indicates "Frequencies" and "Cycles" of the horizontal synchronizing signals of those formats. Furthermore, the total number of lines and the effective number of lines are also defined for each of the formats, though they are not shown in the figure.

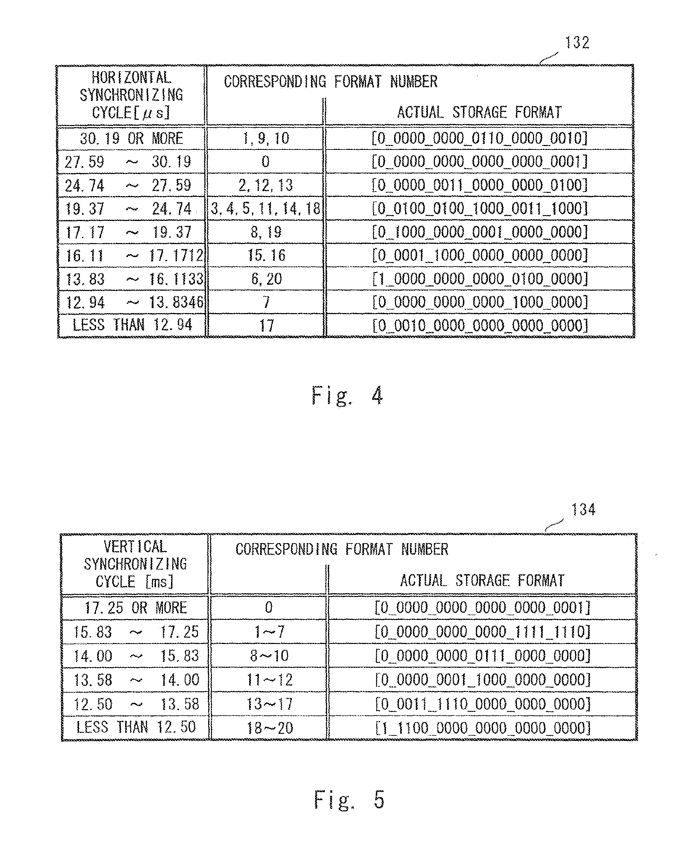

Fig. 4 shows a first table 132 produced based on the examples of known formats shown in Fig. 3. The first table 132 associates and stores a plurality of ranges of cycles, which are obtained by dividing the possible range of horizontal synchronizing cycles into a plurality of consecutive ranges, with corresponding format numbers whose horizontal synchronizing cycles are within their respective ranges of cycles. Furthermore, in the first table 132, the format numbers are, in practice, stored as data having a bit length corresponding to the number of known formats, as shown in the least column of Fig. 4, The data is configured so as to have "High(s)" at bit position(s) corresponding to the format number(s), and "Lows" at all other bit positions. Since there are 21 known formats in this embodiment, the first table 132 stores the format numbers by using 21-bit data. For example, three formats, i.e., format numbers 2, 12, and 13, correspond to the horizontal synchronizing cycle range of 24.74 µs - 27.59 µs. Therefore, the data "000000011000000000100" is stored for the cycle range of 24.74 µs - 27.59 µs in the first table 132. Incidentally, in Fig. 3, the mark "_", which is used just for illustrative purpose, is inserted after every four bits in the 21-bit data indicating format numbers.

Fig. 5 shows a second table 134 produced based on the examples of known formats shown in Fig. 3. The second table 134 associates and stores a plurality of ranges of cycles, which are obtained by dividing the possible range of vertical synchronizing cycles into a plurality of consecutive ranges, with corresponding format numbers whose vertical synchronizing cycles are within their respective ranges of cycles. Further, in the second table 134, the actual storage format for the format numbers is the same as that of the first table 132 as shown in the last column of Fig. 5, and therefore the detailed explanation is omitted.

In the following explanations, format numbers are stored in the above-described storage format, unless specific explanation is provided.

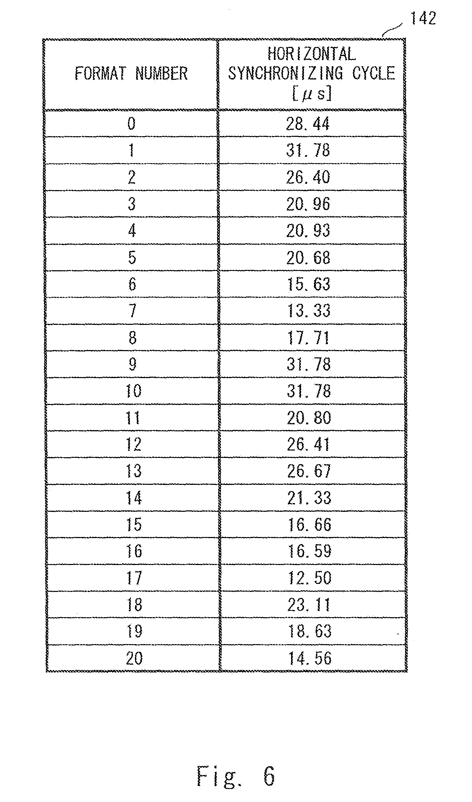

Fig. 6 shows a third table 142. The third table 142 associate and stores each of the format numbers with a corresponding horizontal synchronizing cycle.

The total line number table 164 associates and stores each of the format numbers with the corresponding total number of lines in one field time period for that format, and the effective line number table 168 associates and stores each of the format numbers with the corresponding effective number of lines for that format. Graphical illustrations for these two tables are omitted.

Referring again to Fig. 2, the detail of each component of the format evaluation portion 120 is explained hereinafter. The vertical synchronizing cycle detection portion 122 detects vertical synchronizing cycles from vertical synchronizing signals by counting the synchronizing signal cycles of the vertical synchronizing signals, and outputs them to the first candidate selection portion 130.

The horizontal synchronizing cycle detection portion 124 detects horizontal synchronizing cycles from horizontal synchronizing signals by counting the synchronizing signal cycles of the horizontal synchronizing signals, and outputs them to the first candidate selection portion 130 and second candidate selection portion 140.

The total line number detection portion 126 detects the total number of lines in one field time period for the input video signal by using the vertical synchronizing signal and the horizontal synchronizing signal, and outputs it to the decision execution portion 162 in the format decision portion 160.

The effective line number detection portion 128 detects the effective number of lines by using the vertical synchronizing signal, the horizontal synchronizing signal, and the input video signal, and outputs it to the comparison portion 166 in the format decision portion 160. The effective number of lines is the number of lines existing in the vertical effective area of an input video signal. The effective line number detection portion 128 determines the line area where an image exists (vertical effective area) by slicing the input video signal at certain levels for each of the lines that are determined by the horizontal synchronizing signal to determine the presence of the image within the field range that are determined by the vertical synchronizing signal, and obtains the effective number of lines.

The first candidate selection portion 130 looks for format(s) corresponding to the range of cycles within which the horizontal synchronizing cycle detected by the horizontal synchronizing cycle detection portion 124 falls by referring to the first table 132, and also looks for format(s) corresponding to the range of cycles within which the vertical synchronizing cycle detected by the vertical synchronizing cycle detection portion 122 falls by referring to the second table 134. The first candidate selection portion 130 selects the common format (s) that is found both among the formats obtained by referring the first table 132 and among the formats obtained by referring the second table 134 as format candidate(s), and obtains their format number.

Owing to the storage format of format numbers in the first table 132 and second table 134, the first candidate selection portion 130 can easily select the format candidate(s). Specifically, the first candidate selection portion 130 can performs the above-mentioned selecting process by calculating the logical multiplication of the format numbers obtained by referring the first table 132 and the format numbers obtained by referring the second table 134 on a bit-by-bit basis. The data obtained by the logical multiplication has also 21-bit data format similar to the storage format of format numbers in those tables, and indicates that format (s) corresponding to the bit position(s) having "High" is selected as the format candidate(s).

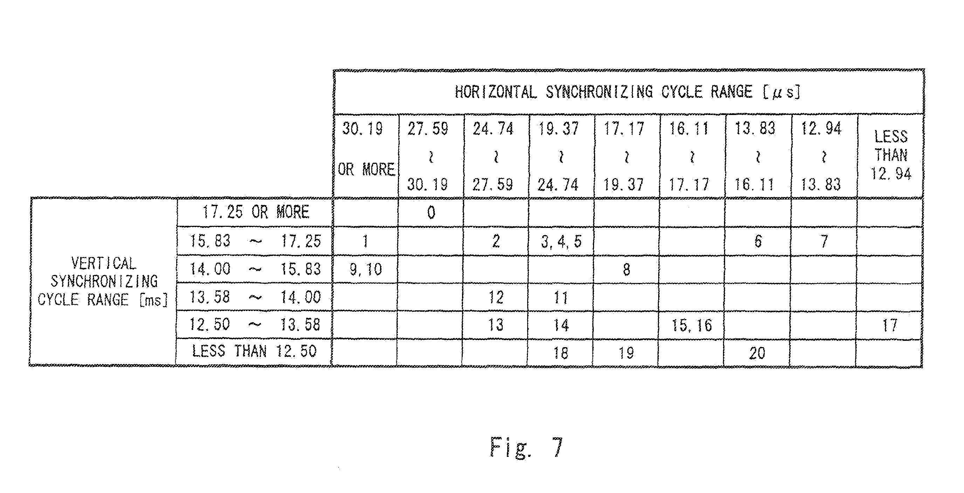

Fig. 7 shows format numbers selected by the first candidate selection portion 130 in accordance with the horizontal synchronizing cycle and vertical synchronizing cycle of an input video signal. For example, when the horizontal synchronizing cycle of an input video signal is within the range of 19.37 µs - 24.74 µs and the vertical synchronizing cycle is within the range of 15.83 ms - 17.25 ms, the format numbers 3, 4, and 5 are selected as format candidates. Meanwhile, when the horizontal synchronizing cycle of an input video signal is within the range of 19.37 µs - 24.74 µs and the vertical synchronizing cycle is within the range of 14.00 ms - 15.83 ms, no format number is obtained as the format candidate from the first candidate selection portion 130.

The first candidate selection portion 130, in addition to outputting a selection result, also controls the switch 150 based on the selection result. Specifically, the first candidate selection portion 130 controls the switch 150 such that the output of the first candidate selection portion 130 is connected to the format decision portion 160 when one or more format candidate(s) is selected by the first candidate selection portion 130. Furthermore, the first candidate selection portion 130 controls the switch 150 such that the output of the second candidate selection portion 140 is connected to the format decision portion 160 when there is no format candidate.

The second candidate selection portion 140 selects format candidate (s) based on the horizontal synchronizing cycle detected by the horizontal synchronizing cycle detection portion 124 by using third table 142.

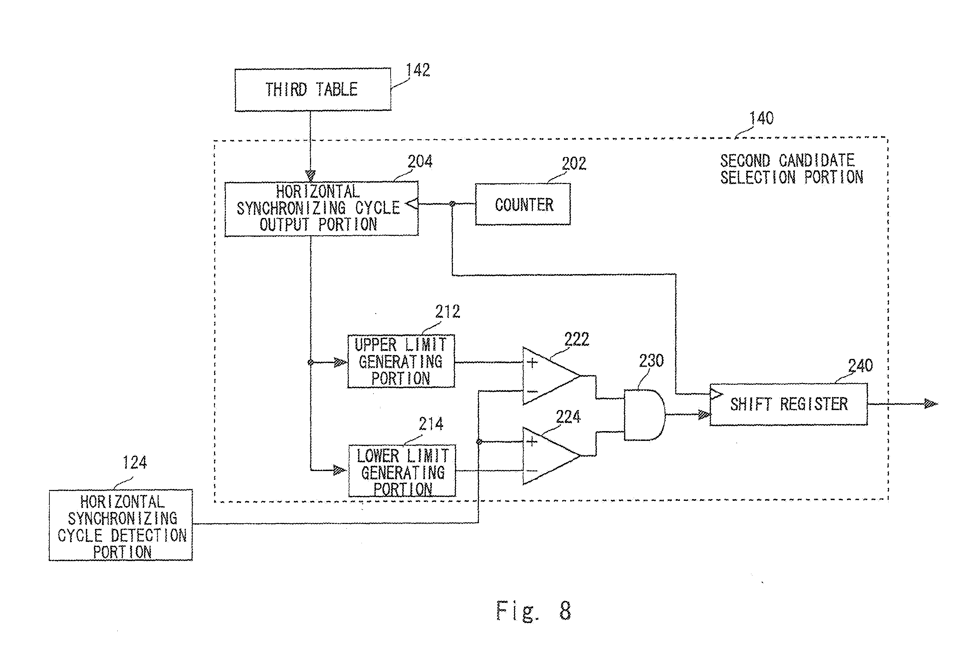

Fig. 8 shows the second candidate selection portion 140. The second candidate selection portion 140 includes a counter 202, a horizontal synchronizing cycle output portion 204, an upper limit generating portion 212, a lower limit generating portion 214, a comparator 222, a comparator 224, a logical multiplication circuit 230, and a shift register 240.

The counter 202 counts up to the number of already-know formats. In this embodiment where there are 21 known formats, the counter 202 counts up from 0 to 20 in sequence, and outputs the count value to the horizontal, synchronizing cycle output portion 204 and shift register 240.

The horizontal synchronizing cycle output portion 204 reads out a horizontal synchronizing cycle having a format number corresponding to the count value outputted from the counter 202 from the third table 142, and outputs it to the upper limit generating portion 212 and lower limit generating portion 214.

The upper limit generating portion 212 uses the horizontal synchronizing cycle from the horizontal synchronizing cycle output portion 204 to generate an upper limit value of the tolerance range for that horizontal synchronizing cycle. This upper limit value is inputted to the noninverting terminal of the comparator 222.

The lower limit generating portion 214 uses the horizontal synchronizing cycle from the horizontal synchronizing cycle output portion 204 to generate a lower limit value of the tolerance range for that horizontal synchronizing cycle. This lower limit value is inputted to the inverting terminal of the comparator 224.

Incidentally, the detail of the above-mentioned tolerance range is explained later in the explanation of the oscillation range control portion 182 and PLL circuit 190 of the reproduction processing portion 180.

The comparator 222 receives the upper limit value generated by the upper limit generating portion 212 at the noninverting terminal and the horizontal synchronizing cycle of the input video signal detected by the horixontal synchronizing cycle detection portion 124 at the inverting terminal, and outputs "High" or "Low" to the logical multiplication circuit 230 depending on the sign of the difference of these two inputs.

The comparator 222 receives the horizontal synchronizing cycle of the input video signal detected by the horizontal synchronizing cycle detection portion 124 at the noninverting terminal and the lower limit value generated by the lower limit generating portion 214 at the inverting terminal, and outputs "High" or "Low" to the logical multiplication circuit 230 depending on the sign of the difference of these two inputs.

The logical multiplication circuit 230 carries out a logical multiplication operation for the outputs from the comparator 222 and comparator 224, and outputs the operation result to the shift register 240.

In this manner, the logical multiplication circuit 230 outputs "High" when the horizontal synchronizing cycle of the input video signal detected by the horizontal synchronizing cycle detection portion 124 falls within the tolerance range of the horizontal synchronizing cycle outputted from the horizontal synchronizing cycle output portion 204, and outputs "Low" when that is not the case.

The shift register 240 receives the count value from the counter 202 and the output from the logical multiplication circuit 230. The shift register 240 operates in synchronization with the counter 202, and stores a format number corresponding to the count value when the output from the logical multiplication circuit 230 is "High".

In this manner, the format numbers, for which the horizontal synchronizing cycles of the input video signal are within the tolerance ranges for the horizontal synchronizing cycles, are successively stored in the shift register 240 of the second candidate selection portion 140, and outputted therefrom. These format numbers are the format candidate numbers selected by the second candidate selection portion 140.

For the following explanations, refer to Fig. 2 again. As stated above, the output of the first candidate selection portion 130 is connected to the format decision portion 160 when one or more format candidate(s) is selected by the first candidate selection portion 130, and the output of the second candidate selection portion 140 is connected to the format decision portion 160 when no format candidate is selected by the first candidate selection portion 130.

The format decision portion 160 determines the format of the input video signal from the format candidates, which are outputted from either the first candidate selection portion 130 or the second candidate selection portion 140. As shown in Fig. 2, the format decision portion 160 includes the decision execution portion 162, the total line number table 164, the comparison portion 166, and the effective line number table 168. The explanations of the total line number table 164 and effective line number table 168 were already made in the above descriptions.

The decision execution portion 162 and comparison portion 166 carry out the following processes. A. When there is only one format candidate, that format candidate is outputted as the format of the input video signal.

B. When there are more than one format candidates, the total numbers of lines that correspond to those format candidates are read out from the total line number table 164, and then they are compared with the total number of lines detected by the total line number detection portion 126. With the comparison result, the format candidate whose total number of lines has the smallest difference from the total number of lines detected by the total line number detection portion 126 is outputted as the format of the input video signal in the case where there is no other formats whose total numbers of lines also have the smallest difference.

C. In the case where there are more than one format candidates whose total numbers of lines have the smallest difference from the total number of lines detected by the total line number detection portion 126 in the comparison result in the above-mentioned process B, the comparison portion 166 reads out the effective numbers of lines that correspond to these more-than-one format candidates from the effective line number table 168, compares them with the effective number of lines detected by the effective line number detection portion 128, and outputs the comparison result to the decision execution portion 162.

The decision execution portion 162 determines and outputs, based on the comparison result from the comparison portion 166, the format candidate whose effective number of lines has the smallest difference from the effective number of lines detected by the effective line number detection portion 128 among the format candidates whose total numbers of lines have the smallest difference from the total number of lines detected by the total line number detection portion 126 as the format of the input video signal.

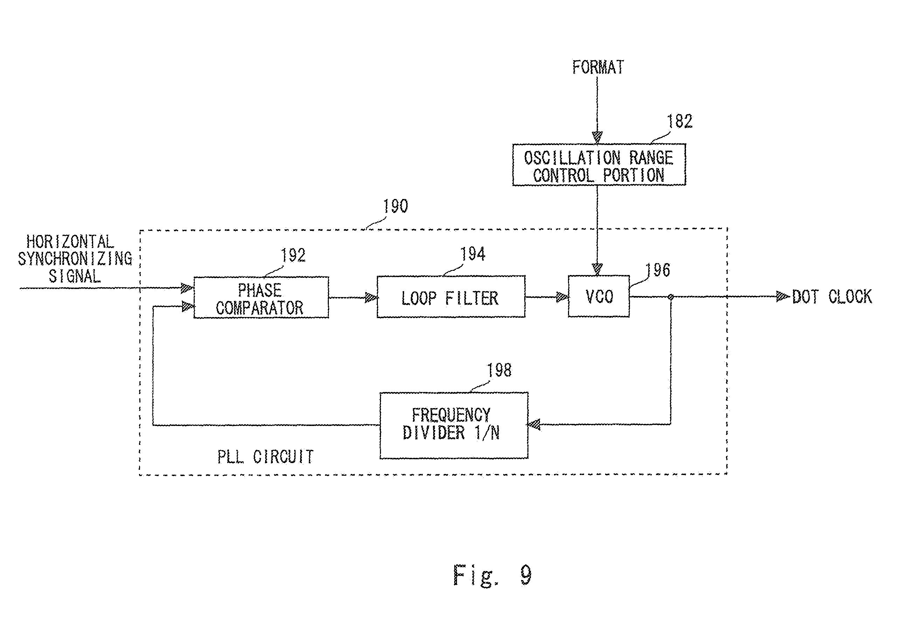

Next, the oscillation range control portion 182 and PLL circuit 190 in the reproduction processing portion 180 are explained hereinafter. In the image reproducing device 100 in accordance with this embodiment, the reproduction processing portion 180 takes out pixels from an input video signal and reproduces images by using a dot clock signal having a frequency corresponding to the dot frequency of the pixels of the input video signal, and the PLL circuit 190 generates the dot clock signal based on the horizontal synchronizing signal of the input video signal. As shown in Fig. 9, the PLL circuit 190 includes a phase comparator 192, a loop filter 194, a VCO (Voltage Controlled Oscillator) 196, and a frequency divider 198. The oscillation range of the VCO 196 is controlled by the oscillation range control portion 182.

The VCO 196 generates a clock signal, and outputs it to the frequency divider 198. The frequency divider 198 frequency-divides the clock signal generated by the VCO 196 by N (N: the number of dots in one line), and outputs it to the phase comparator 192. The phase comparator 192 acquires the phase difference between the horizontal synchronizing signal of the input video signal and the frequency-divided clock signal outputted from the frequency divider by comparing their phases. The loop filter 194 adjusts the phase of the frequency-divided clock signal from the frequency divider such that it conforms with the phase of the horizontal synchronizing signal, by feeding back the phase difference obtained by the phase comparator 192 to the VCO 196. With this structure of the PLL circuit 190, the clock signal generated by the VCO 196 becomes the dot clock signal having a frequency equivalent to the dot frequency.

Since the number of dots in one line can take any value from several hundred to several thousand depending on the format of the video signal, the oscillation frequency of the VCO in the PLL circuit should be able to cover the wide range of frequencies from 20 MHz to 200 MHz. In order to generate a dot clock signal that enables swift phase-locking and has minimum jitter, the oscillation range of the VCO is customarily narrowed so as to get closer to the frequency of the dot clock to be generated (target frequency). In this manner, since the VCO oscillates within the oscillation range that is narrowed based on the target frequency, the excessive responses in the PLL circuit can be reduced and the accuracy of the dot clock can be improved.

The oscillation range control portion 182 is provided for this purpose, and controls the oscillation range of the VCO 196 based on the format determined by the format evaluation portion 120. The target frequency is the dot frequency of an inputted video signal, and the dot frequency is the product of the frequency of the horizontal synchronizing signal of the video signal and the number of dots in one line. Furthermore, once the format of an input video signal is determined, the number of dots in one line is determined from the determined format, and the dot frequency is also uniquely determined. The oscillation range control portion 182 controls the oscillation range of the VCO 196 such that it gets closer to the dot frequency that is determined from the format that is in turn determined by the format evaluation portion 120.

If the format of an input video signal is not appropriately evaluated, e.g., if the dot frequency of the determined format is widely different from the dot frequency of the input video signal, the phase difference detected by the phase comparator 192 becomes larger, and therefore the VCO 196 cannot carry out stable oscillation. Furthermore, since the oscillation range of the VCO 196 is adjusted based on the dot frequency of the determined format, the phase difference detected by the phase comparator 192 may become so large that the VCO 196 is required to oscillate outside of the proper oscillation range, and thereby raising a problem that it fails to carry out a normal operation.

In contrast to that, the format evaluation portion 120 in this embodiment of the present invention selects a format candidate based on the horizontal synchronizing cycle of an input video signal by using the second candidate selection portion 140 even in the case where the format of the input video signal is unknown and no format candidate is selected by the first candidate selection portion 130, not to mention the case where the format of the input video signal is already-known. Therefore, the VCO 196 can always oscillate stably, and does not fail to carry out the normal operation. A frequency is the reciprocal of the cycle, and a dot frequency is the product of the frequency of the horizontal synchronizing signal and the number of dots in one line. Therefore, the following explanations are made by using the cycle for the convenience of the illustration.

For example, assuming that the format that is inputted to the oscillation range control portion 182 has a horizontal synchronizing cycle "T" and the number of dots in one line "N"_{,} the oscillation range control portion 182 controls the oscillation range of the VCO 196 such that it oscillates within the range of "(T ± T×5%)/N". The cycle of the clock signal generated by the VCO 196 is frequency-multiplied by N in the frequency divider 198 and inputted to the phase comparator 192. Therefore, the operational failure of the VCO 196 is prevented if the difference between "T" and the cycle of the horizontal synchronizing signal inputted to the phase comparator 192 is within the range of ± T×5%. In the following explanations, "(T ± T×5%)" is called "operable cycle range" of the PLL circuit.

The tolerance range of the horizontal synchronizing cycle, which is used by the second candidate selection portion 140 to select format candidate (s), is explained hereinafter. The upper limit generating portion 212 and lower limit generating portion 214 of the second candidate selection portion 140 generates the upper limit and the lower limit of the horizontal synchronizing cycle for each of the formats such that they fall within the operable cycle range of the PLL circuit 190. In an example consistent with the above-described example of the oscillation range control portion 182, the upper limit generating portion 212 generates the upper limit for the tolerance range of the horizontal synchronizing cycle of the target format by multiplying the horizontal synchronizing cycle of that format by 1.05, and generates the lower limit for the tolerance range of the horizontal synchronizing cycle of the target format by multiplying the horizontal synchronizing cycle of that format by 0.95. In this manner, it ensures that the actual horizontal synchronizing cycle of an input video signal exists within the operable cycle range of the PLL circuit.

As described above, the image reproducing device 100 in accordance with this embodiment selects format candidate (s) based on the horizontal synchronizing cycle when no format candidate is obtained by the first candidate selection portion 130, which selects format candidate (s) based on the horizontal synchronizing cycle and vertical synchronizing cycle. In this manner, when the format of an input video signal is unknown, a format similar to the format of the input video signal is selected based on the horizontal synchronizing cycle, and therefore the format determination can be performed in an effective manner. In addition, by using the selected format similar to the format of the input video signal, the dot clock signal can be stably generated.

For example, in the image reproducing device 100 in accordance with this embodiment, the first candidate selection portion 130, which can select format candidate(s) when the format of an input video signal is one of already-known formats, selects the common format (s) between format (s) corresponding to the range of cycles within which the horizontal synchronizing cycle of the input video signal falls and format (s) corresponding to the range of cycles within which the vertical synchronizing cycle of the input video signal falls as the format candidate(s) by referring to the first table 132 and the second table 134. In this manner, the selection for format candidate(s) can be performed swiftly even in the circumstance in these days where a variety of format standards are used. The selection for format candidate(s) may be also performed by constructing a table that associates already-known formats with horizontal synchronizing cycles and vertical synchronizing cycles, and comparing the horizontal synchronizing cycle and vertical synchronizing cycle of an input video signal with the horizontal synchronizing cycle and vertical synchronizing cycle of each format stored in the table in a successive manner.

Furthermore, the second candidate selection portion 140 may be controlled such that it operates only when no format candidate is obtained by the first candidate selection portion 130.

It is apparent that the present invention is not limited to the above embodiments, but may be modified and changed without departing from the scope and spirit of the invention.

An embodiment of the present invention may be summarized as follows.

A first candidate selection portion 130 selects format candidates based on the horizontal synchronizing cycle and the vertical synchronizing cycle of an input video signal. A second candidate selection portion 140 selects formats having the tolerance ranges for the horizontal synchronizing cycles within which the horizontal synchronizing cycle of the input video signal falls as format candidates. A format decision portion 160 determines the format of the input video signal from format candidates from the first candidate selection portion 130 when format candidate (s) is obtained by the first candidate selection portion 130, and determines the format of the input video signal from format candidates selected by the second candidate selection portion 140 when no format candidate is obtained by the first candidate selection portion 130.

## Claims

1. A signal processing device comprising:
a first candidate selection portion to select format candidate (s) of an input video signal based on a horizontal synchronizing cycle and a vertical synchronizing cycle of the input video signal;
a horizontal synchronizing cycle table to store a horizontal synchronizing cycle for each format of the input video signal;
a second candidate selection portion to select format(s), for which the horizontal synchronizing cycle of the input video signal is within a predetermined tolerance range for the horizontal synchronizing cycle, as format candidate(s) by referring to the horizontal synchronizing cycle table; and
a format decision portion to determine a format candidate selected by the first candidate selection portion as the format of the input video signal when format candidate(s) is obtained by the first candidate selection portion, and determine a format candidate selected by the second candidate selection portion as the format of the input video signal when no format candidate is obtained by the first candidate selection portion.

2. The signal processing device according to Claim 1, further comprising a PLL (Phase-Locked Loop) circuit to generate
a dot clock signal having a frequency corresponding to the dot
frequency of the input video signal based on the horizontal synchronizing cycle of the input video signal, the PLL circuit having a voltage controlled oscillator,
wherein the oscillation range of the voltage controlled oscillator is controlled based on the dot frequency of the format determined by the format decision portion; and
the second candidate selection portion selects the format candidate(s) by using the predetermined tolerance range, the predetermined tolerance range being established such that the dot frequency difference corresponding to the difference between the horizontal synchronizing cycle of the format candidate and the horizontal synchronizing cycle of the input video signal falls within the range that can be covered by the oscillation range of the voltage controlled oscillator.

3. The signal processing device according to Claim 1 or 2, further comprising:
a first cycle range table to associate and store a plurality of horizontal synchronizing cycle ranges with corresponding formats whose horizontal synchronizing cycles are within their respective horizontal synchronizing cycle ranges, the plurality of horizontal synchronizing cycle ranges being obtained by dividing the possible range of the horizontal synchronizing cycles of the video signal into the plurality of horizontal synchronizing cycle ranges; and
a second cycle range table to associate and store a plurality of vertical synchronizing cycle ranges with corresponding formats whose vertical synchronizing cycles are within their respective vertical synchronizing cycle ranges, the plurality of vertical synchronizing cycle ranges being obtained by dividing the possible range of the vertical synchronizing cycles of the video signal into the plurality of vertical synchronizing cycle ranges;
wherein the first candidate selection portion selects common format(s) between format(s) corresponding to the horizontal synchronizing cycle ranges within which the horizontal synchronizing cycle of the input video signal falls and format(s) corresponding to the vertical synchronizing cycle ranges within which the vertical synchronizing cycle of the input video signal falls as the format candidate (s) by referring to the first cycle range table and the second cycle range table.

4. The signal processing device according to one of Claims 1 to 3, wherein when more than one format candidates are selected by the first candidate selection portion or the second candidate selection portion, the format decision portion determines the format of the input video signal from these more than one format candidates by using a determination factor other than the horizontal synchronizing cycle and the vertical synchronizing cycle.

5. The signal processing device according to one of Claims 1 to 4, wherein the format decision portion uses the number of lines in one field time period as the determination factor.

6. The signal processing device according to Claim 5, wherein the format decision portion further uses the effective number of lines as the determination factor.

7. The signal processing device according to one of Claims 1 to 6, wherein the second candidate selection portion operates only when no format candidate is obtained by the first candidate selection portion.
